**Europäisches Patentamt**

**European Patent Office**

**Office européen des brevets**

(19)

(11) Numéro de publication : **0 006 668**
**B1**

(12) **FASCICULE DE BREVET EUROPÉEN**

(45) Date de publication du fascicule du brevet :
24.02.82

(51) Int. Cl.³ : **C 08 L 27/06**

(21) Numéro de dépôt : **79200331.1**

(22) Date de dépôt : **21.06.79**

(54) **Compositions stabilisées à la chaleur à base de polymères du chlorure de vinyle.**

(30) Priorité : 29.06.78 FR 7820130

(43) Date de publication de la demande :
09.01.80 (Bulletin 80/01)

(45) Mention de la délivrance du brevet :
24.02.82 Bulletin 82/08

(84) Etats contractants désignés :
AT BE CH DE FR GB IT LU NL SE

(56) Documents cités :
FR - A - 2 116 961
US - A - 3 793 272
US - A - 4 058 495

(73) Titulaire : **SOLVAY & Cie (Société Anonyme)**
**Rue du Prince Albert, 33**
**B-1050 Bruxelles (BE)**

(72) Inventeur : **Servotte, André**
**Molenstraat, 89**
**B-1950 Kraainem (BE)**

(74) Mandataire : **Elschen, Roland**
**Solvay & Cie Département de la Propriété Industrielle**
**Rue de Ransbeek 310**
**B-1120 Bruxelles (BE)**

Imprimerie Jouve, 18, rue St-Denis, 75001 Paris, France

## Compositions stabilisées à la chaleur à base de polymères du chlorure de vinyle

La présente invention concerne des compositions stabilisées à la chaleur à base de polymères du chlorure de vinyle. Elle concerne plus particulièrement des compositions à base de polymères du chlorure de vinyle, contenant un costabilisant polyhydroxylé, qui présentent une stabilité thermique améliorée.

La stabilité thermique d'un polymère s'évalue généralement à court terme et à long terme. La stabilité thermique à court terme, ou stabilité thermique initiale, est l'aptitude du polymère à résister à la dégradation provoquée par l'élévation de température à laquelle il faut le soumettre pour y incorporer les additifs usuels et le mettre en œuvre. Une mauvaise stabilité thermique initiale se marque par une altération de la coloration des objets façonnés qui est d'autant plus importante que la stabilité est faible. La stabilité thermique à long terme est mesurée par le temps qui s'écoule avant qu'un échantillon de polymère ne noircisse dans des conditions données.

Pour de nombreuses applications des polymères du chlorure de vinyle, telles que par exemple la fabrication de corps creux et de feuilles calandrées destinés à l'emballage, il est impérieux de disposer de polymères qui présentent, non seulement une excellente stabilité thermique à long terme, mais également une bonne stabilité thermique initiale.

Dans le brevet belge 762 443 déposé le 2 février 1971 au nom de Melle Bezons, on décrit l'utilisation d'acétates de polyvinyle partiellement hydroxylés (alcools polyvinyliques) pour améliorer la stabilité thermique des polymères du chlorure de vinyle contenant des sels organiques de calcium et de zinc comme stabilisants thermiques primaires.

On a constaté que les alcools polyvinyliques améliorent la stabilité thermique à long terme des polymères du chlorure de vinyle, mais que cette amélioration se fait au détriment de la stabilité thermique à court terme.

La présente invention, telle qu'elle est caractérisée dans les revendications, a pour but de procurer des compositions stabilisées à la chaleur à base de polymères du chlorure de vinyle dont la stabilité thermique à long terme est améliorée sans diminution concomitante de la stabilité thermique à court terme et qui soient aptes à être transformées en objets façonnés présentant un excellent coloris initial, et ce, sur des machines fonctionnant à cadence élevée.

Il est surprenant de constater que les hydroxypropylcelluloses améliorent sensiblement la stabilité thermique à long terme sans détériorer la stabilité thermique à court terme des polymères du chlorure de vinyle, alors que les alcools polyvinyliques ont pour effet d'améliorer leur stabilité thermique à long terme au détriment de leur stabilité thermique à court terme. Par ailleurs, il est à noter que les hydroxyalkylcelluloses autres que les hydroxypropylcelluloses, telles que les hydroxyéthylcelluloses, améliorent la stabilité thermique à long terme des polymères du chlorure de vinyle au détriment de la stabilité thermique à court terme et que les dérivés cellulosiques autres que les hydroxyalkylcelluloses, tels que par exemple les alkylcelluloses, n'ont pratiquement aucun effet stabilisant à long terme sur les polymères du chlorure de vinyle.

Toutes les hydroxypropylcelluloses conviennent à la réalisation de compositions conformes à l'invention. De même, ces compositions peuvent contenir plusieurs hydroxypropylcelluloses.

Les hydroxypropylcelluloses sont des dérivés cellulosiques, connus en eux-mêmes, qui sont caractérisés par le nombre moyen de moles de réactif d'hydroxypropylation combinées avec la cellulose par unité d'anhydroglucose. Ce nombre est généralement désigné par l'abréviation « M.S. ».

On donne la préférence aux hydroxypropylcelluloses présentant un nombre M.S. de 1,5 à 10. Des hydroxypropylcelluloses tout particulièrement préférées sont celles présentant un nombre M.S. de 2 à 5.

La viscosité des hydroxypropylcelluloses n'est pas critique. On peut donc utiliser indifféremment des hydroxypropylcelluloses très visqueuses ou très peu visqueuses, telles que par exemple des hydroxypropylcelluloses dont la viscosité Brookfield, mesurée à 25 °C en solution aqueuse à 1 %, est comprise entre $1.10^{-3}$ et $1.10^{1}$ Pa.s. Habituellement, on utilise des hydroxypropylcelluloses dont la viscosité est comprise entre $2.10^{-3}$ et $5.10^{-1}$ Pa.s.

La quantité d'hydroxypropylcellulose présente dans les compositions conformes à l'invention n'est pas critique. L'utilisation de quantités aussi faibles que 0,1 partie pour 1 000 parties en poids de polymère du chlorure de vinyle suffit déjà pour améliorer la stabilité thermique à long terme des polymères du chlorure de vinyle. L'addition de quantités plus importantes de costabilisants conformes à l'invention permet de l'améliorer encore. Cependant, habituellement on ne dépasse pas une teneur en hydroxypropylcellulose de 5 parties en poids. De préférence, les compositions contiennent de 0,2 à 2 parties, et plus particulièrement encore, de 0,5 à 1,5 parties d'hydroxypropylcelluloses pour 1 000 parties en poids de polymère du chlorure de vinyle.

Par ailleurs, tous les stabilisants thermiques primaires usuels des polymères du chlorure de vinyle du type des systèmes stabilisants calcium-zinc conviennent à la réalisation de compositions selon l'invention.

A titre d'exemples de systèmes calcium-zinc, on peut citer ceux à base de savons de calcium et de zinc. Avantageusement, on utilise des sels de zinc et de calcium d'acides aliphatiques monocarboxyliques ayant de 6 à 30 atomes de carbone tels que par exemple les acides stéarique, palmitique, 2- éthylhexanoïque, etc. La proportion relative du calcium au zinc est généralement comprise entre 1 et 5 atomes de calcium pour 1 atome de zinc.

Les doses des stabilisants thermiques primaires sont celles usuellement utilisées. On incorpore donc généralement de 0,1 à 10 parties en poids de stabilisant thermique primaire dans 100 parties de polymère et, de préférence, de 0,2 à 1 partie en poids de stabilisant thermique primaire dans 100 parties de polymère.

Il est entendu que les compositions selon l'invention peuvent contenir, outre le stabilisant thermique primaire et l'hydroxypropylcellulose, d'autres ingrédients usuels tels que par exemple, des agents facilitant la mise en œuvre, des plastifiants, des agents renforçants, des pigments, des lubrifiants ou encore des stabilisants thermiques auxiliaires des polymères du chlorure de vinyle.

Par polymères du chlorure de vinyle, on entend désigner tous les polymères contenant au moins 50 % molaires, et de préférence au moins 70 % molaires, d'unités monomériques dérivées du chlorure de vinyle. Les polymères du chlorure de vinyle qui conviennent à la réalisation des compositions selon l'invention comprennent donc aussi bien les homopolymères du chlorure de vinyle que ses copolymères contenant des unités monomériques dérivées d'un ou de plusieurs comonomères. Ces copolymères peuvent être des copolymères statistiques, des copolymères à blocs ou encore des copolymères greffés sur un tronc quelconque. A titre d'exemples de comonomères du chlorure de vinyle on peut citer les oléfines telles que l'éthylène, le propylène et le styrène, les esters tels que l'acétate de vinyle et les acrylates et les méthacrylates d'alkyle, les dérivés vinylidéniques tels que le chlorure et le fluorure de vinylidène.

De préférence, les compositions suivant l'invention sont à base d'homopolymères du chlorure de vinyle.

Le mode de fabrication des polymères du chlorure de vinyle mis en œuvre peut être quelconque. On peut donc utiliser indifféremment pour la fabrication de compositions selon l'invention des polymères du chlorure de vinyle obtenus par polymérisation en masse, en phase gazeuse, en solution ou encore en émulsion, en suspension ou en dispersion aqueuses et ce, en présence des ingrédients usuels de ces types de polymérisation.

De préférence, les compositions suivant l'invention sont à base de polymères du chlorure de vinyle obtenus en suspension aqueuse.

L'incorporation des hydroxypropylcelluloses dans le polymère du chlorure de vinyle ne pose aucun problème particulier. Les hydroxypropylcelluloses sont habituellement mélangées avec le polymère de manière connue en soi, par exemple, au stade de la fabrication du prémélange ou encore au stade de la polymérisation, soit par introduction directe dans le milieu de polymérisation — en début, en cours ou à la fin de la polymérisation —, soit par addition au gâteau humide obtenu par essorage ou filtration de la dispersion aqueuse venant de polymérisation.

La forme sous laquelle les hydroxypropylcelluloses sont incorporées aux polymères du chlorure de vinyle n'est pas non plus critique. On peut les incorporer au polymère sous la forme d'une poudre, d'une solution ou d'une dispersion dans l'eau ou dans un solvant organique non solvant du polymère du chlorure de vinyle. Dans tous les cas, il est recommandé d'incorporer les hydroxypropylcelluloses sous la forme la plus appropriée à favoriser leur incorporation homogène au polymère du chlorure de vinyle.

Les compositions stabilisées à la chaleur conformes à l'invention sont aptes à la mise en œuvre par tous les procédés classiques de transformation des matières plastiques. Ces compositions conviennent pour la fabrication d'emballages tels que des feuilles calandrées ou des corps creux — flacons, bouteilles et autres récipients — présentant un excellent coloris initial. Elles conviennent particulièrement pour la fabrication de feuilles et de corps creux destinés à l'emballage de liquides et de solides et plus particulièrement encore pour la fabrication de bouteilles transparentes, peu ou pas colorées, pour le conditionnement de liquides alimentaires tels que par exemple le vinaigre, l'huile, l'eau, etc., par extrusion-soufflage à l'aide de machines fonctionnant à cadence élevée.

Les exemples qui suivent illustrent l'invention sans toutefois la limiter.

## Exemples 1 à 11

Dans tous les exemples, on a utilisé comme polymère du chlorure de vinyle un homopolymère du chlorure de vinyle obtenu par polymérisation en suspension aqueuse.

Dans les exemples 1, 2R, 3R, 4R, 5, 6, 7, 8R et 9R, on a utilisé un polychlorure de vinyle obtenu par polymérisation en présence d'un polyacétate de vinyle partiellement hydrolysé (alcool polyvinylique) comme agent dispersant.

Dans les exemples 10R et 11, on a utilisé un polychlorure de vinyle obtenu par polymérisation en présence d'un alcool polyvinylique et d'un émulsionnant non ionique (produit de condensation d'un polyalkylèneglycol sur une polyamine).

Les polychlorures de vinyle utilisés dans les exemples 1 à 11 ont un nombre K = 58 (mesuré dans la cyclohexanone à 25 °C).

Les exemples 1, 5, 6, 7 et 11 selon l'invention, illustrent des compositions contenant de l'hydroxypropylcellulose (nombre M.S., de 3,5 à 4, viscosité en solution aqueuse à 1 % et à 25 °C : $4.10^{-3}$ Pa.s.).

L'exemple 3R, de référence, illustre une composition selon l'art antérieur contenant un alcool polyvinylique, plus particulièrement un polyacétate de vinyle partiellement hydrolysé (taux d'hydrolyse : 73 % molaires, viscosité en solution aqueuse à 4 % et à 25 °C : 5.10⁻³ Pa.s.).

Les exemples 2R, 4R et 10R, tous également de référence, illustrent des compositions ne contenant pas de costabilisant thermique polyhydroxylé.

Les exemples 8R et 9R, de référence, illustrent des compositions contenant des dérivés cellulosiques autres que les hydroxypropylcelluloses.

Dans l'exemple 8R, on a utilisé une hydroxyéthylcellulose (nombre M.S. 2,5, viscosité en solution aqueuse à 5 % et à 25 °C : 1.10⁻¹ Pa.s.).

Dans l'exemple 9R, on a utilisé une méthylcellulose (nombre D.S., degré de substition en groupements méthoxy, de 1,79 à 1,83, viscosité en solution aqueuse à 2 % et à 20 °C : 16.10⁻³ Pa.s.).

Dans les exemples 1 et 3R, le costabilisant polyhydroxylé a été incorporé au polychlorure de vinyle au stade de la fabrication du prémélange.

Dans les exemples 5, 6 et 7, le costabilisant polyhydroxylé a été incorporé au polychlorure de vinyle au stade de la polymérisation, par incorporation dans la charge de polymérisation.

Dans les exemples 8R et 9R, le costabilisant polyhydroxylé a été incorporé au polychlorure de vinyle par addition au gâteau humide obtenu par essorage sous la forme d'une solution aqueuse à 5 %.

Dans l'exemple 11, le costabilisant polyhydroxylé a été incorporé au polychlorure de vinyle au stade de la polymérisation, par incorporation dans le milieu de polymérisation, en fin de polymérisation et avant essorage.

Dans les exemples 1, 2R et 3R, on a évalué des compositions répondant à la formulation A et dans les exemples 4R, 5, 6, 7, 8R, 9R, 10R et 11 des compositions répondant à la formulation B, les teneurs étant exprimées en parties en poids.

|  | Formulation A | Formulation B |
| --- | --- | --- |
| Polychlorure de vinyle | 100 | 100 |
| Huile de soja époxydée | 5 | 4 |
| Modifiant acrylique | 7,5 | 10 |
| Ester de glycérol | 3 | 2 |
| Cire de polyéthylène | 0,25 | 0,10 |
| Stéarate de calcium | 0,17 | 0,27 |
| Ethylhexanoate de zinc | 0,24 | 0,14 |
| α-Phénylindole | — | 0,45 |
| Dodécyl-α-phénylindole | 0,75 | — |
| Mélange-maître contenant un pigment bleu | 1,60 | 0,80 |
| Costabilisant polyhydroxylé | Voir tableau I | |

La stabilité thermique à court terme (coloration initiale) est évaluée sur des crêpes d'une épaisseur d'1 mm obtenus par malaxage des compositions à 190 °C (malaxeur à deux cylindres) pendant 3 minutes.

La stabilité thermique à long terme, également évaluée sur malaxeur à 190 °C, est déterminée par la mesure du temps qui s'écoule avant que le crêpe ne noircisse.

Dans le Tableau I sont consignés les résultats de l'évaluation.

La comparaison des résultats de l'exemple 1 avec ceux des exemples de référence 2R et 3R montre la supériorité de l'hydroxypropylcellulose sur l'alcool polyvinylique, utilisés comme costabilisants.

La comparaison des résultats des exemples selon l'invention 1, 5, 6, 7 et 11 avec ceux des exemples de référence 2R, 4R et 10R montre que l'utilisation d'une hydroxypropylcellulose améliore sensiblement la stabilité thermique à long terme du polychlorure de vinyle sans diminuer de manière significative sa stabilité thermique à court terme, et ce, indépendamment du mode d'incorporation de l'hydroxypropylcellulose.

La comparaison des résultats de l'exemple 7, selon l'invention, avec ceux des exemples de référence 8R et 9R montre que l'amélioration significative de la stabilité thermique à long terme sans diminution concomitante de la stabilité thermique à court terme est spécifiquement observée avec les hydroxypro-pylcelluloses.

4

TABLEAU I

| No de l'exemple | Formulation évaluée | Costabilisant polyhydroxylé | | Stabilité thermique | |
|---|---|---|---|---|---|
| | | Nature | Quantité, ‰ en poids | à court terme (coloris initial) | à long terme min, sec. |
| 1 | A | Hydroxypropyl-cellulose | 1,00 | bleu | 37' 55" |
| 2R | A | — | — | bleu | 21' 00" |
| 3R | A | Alcool poly-vinylique | 1,00 | bleu verdâtre | 28' 05" |
| 4R | B | — | — | bleu | 19' 00" |
| 5 | B | Hydroxypropyl-cellulose | 0,30 | bleu | 23' 30" |
| 6 | B | idem | 0,77 | bleu | 30' 50" |
| 7 | B | idem | 1,00 | bleu | 36' 00" |
| 8R | B | Hydroxyéthyl-cellulose | 1,00 | bleu verdâtre | 31' 50" |
| 9R | B | Méthylcellulose | 1,00 | bleu | 24' 15" |
| 10R | B | — | — | bleu | 18' 00" |
| 11 | B | Hydroxypropyl-cellulose | 1,00 | bleu | 34' 15" |

## Revendications

1. Compositions stabilisées à la chaleur à base de polymères du chlorure de vinyle comprenant un stabilisant thermique primaire usuel du type des systèmes stabilisants calcium-zinc et un costabilisant polyhydroxylé, caractérisées en ce que le costabilisant polyhydroxylé est une hydroxypropylcellulose.

2. Compositions suivant la revendication 1, caractérisées en ce que l'hydroxypropylcellulose présente un nombre moyen de moles de réactif d'hydroxypropylation combinées avec la cellulose par unité d'anhydroglucose de 1,5 à 10.

3. Compositions suivant la revendication 2, caractérisées en ce que l'hydroxypropylcellulose présente un nombre moyen de moles de réactif d'hydroxypropylation combinées avec la cellulose par unité d'anhydroglucose de 2 à 5.

4. Compositions suivant l'une quelconque des revendications 1 à 3, caractérisées en ce qu'elles contiennent de 0,2 à 2 parties d'hydroxypropylcellulose pour 1 000 parties en poids de polymère du chlorure de vinyle.

5. Compositions suivant l'une quelconque des revendications 1 à 4, caractérisées en ce que le stabilisant thermique primaire est choisi parmi les systèmes à base de sels de calcium et de zinc d'acides aliphatiques monocarboxyliques ayant de 6 à 30 atomes de carbone.

6. Compositions suivant l'une quelconque des revendications 1 à 5, caractérisées en ce qu'elles contiennent de 0,2 à 1 partie de stabilisant thermique primaire pour 100 parties en poids de polymère du chlorure de vinyle.

## Claims

1. Heat-stabilised compositions based on vinyl chloride polymers, which comprise a customary primary heat stabiliser of the type consisting of calcium-zinc stabilising systems, and a polyhydroxylic co-stabiliser, characterised in that the polyhydroxylic co-stabiliser is a hydroxypropylcellulose.

2. Compositions according to Claim 1, characterised in that, in the hydroxypropylcellulose, the average number of mols of hydroxypropylation reactant combined with the cellulose, per anhydroglucose unit, is 1.5 to 10.

3. Compositions according to Claim 2, characterised in that, in the hydroxypropylcellulose, the average number of mols of hydroxypropylation reactant combined with the cellulose, per anhydroglucose unit, is 2 to 5.

4. Compositions according to any one of claims 1 to 3, characterised in that they contain from 0.2 to 2 parts of hydroxypropylcellulose per 1 000 parts by weight of vinyl chloride polymer.

5. Compositions according to any one of Claims 1 to 4, characterised in that the primary heat stabiliser is chosen from amongst systems based on calcium salts and zinc salts of aliphatic monocarboxylic acids having from 6 to 30 carbon atoms.

6. Compositions according to any one of Claims 1 to 5, characterised in that they contain from 0.2 to 1 part of primary heat stabiliser per 100 parts by weight of vinyl chloride polymer.


**Ansprüche**

1. Gegen Hitze stabilisierte Zusammensetzungen auf Basis von Vinylchloridpolymeren enthaltend einen üblichen primären Wärmestabilisator vom Typ der Calzium-Zink- Stabilisatorsysteme und einen polyhydroxylierten Co-Stabilisator, dadurch gekennzeichnet, daß der polyhydroxylierte Co-Stabilisator eine Hydroxypropylcellulose ist.

2. Zusammensetzungen gemäß Anspruch 1, dadurch gekennzeichnet, daß die Hydroxypropylcellulose eine mittlere Anzahl von Molen des Hydroxypropylierungsmittels kombiniert mit der Cellulose je Anhydroglucoseeinheit von 1,5 bis 10 aufweist.

3. Zusammensetzungen gemäß Anspruch 2, dadurch gekennzeichnet, daß die Hydroxypropylcellulose eine mittlere Anzahl von Molen des Hydroxypropylierungsmittels kombiniert mit der Cellulose je Anhydroglucoseeinheit von 2 bis 5 aufweist.

4. Zusammensetzungen gemäß einem der Ansprüche 1 bis 3, dadurch gekennzeichnet, daß sie 0,2 bis 2 Teile Hydroxypropylcellulose je 1 000 Gewichtsteile Vinylchloridpolymer enthalten.

5. Zusammensetzungen gemäß einem der Ansprüche 1 bis 4, dadurch gekennzeichnet, daß der primäre Wärmestabilisator ausgewählt ist unter den Systemen auf Basis von Kalzium- und Zinksalzen der aliphatischen Monocarbonsäuren mit 6 bis 30 Kohlenstoffatomen.

6. Zusammensetzungen gemäß einem der Ansprüche 1 bis 5, dadurch gekennzeichnet, daß sie 0,2 bis 1 Teil primären Wärmestabilisator je 100 Gewichtsteile Vinylchloridpolymer enthalten.